(19) 

Europäisches
Patentamt
European
Patent Office
Office européen
des brevets

(11)  **EP 1 475 149 B1**

(12)  **EUROPEAN PATENT SPECIFICATION**

(45) Date of publication and mention
of the grant of the patent:
**21.05.2008 Bulletin 2008/21**

(21) Application number: **03704721.4**

(22) Date of filing: **14.02.2003**

(51) Int Cl.:
*B01J 23/58* (2006.01)     *B01J 23/63* (2006.01)
*B01D 53/56* (2006.01)

(86) International application number:
**PCT/ES2003/000083**

(87) International publication number:
**WO 2003/068390 (21.08.2003 Gazette 2003/34)**

(54) **CATALYST CONTAINING PLATINUM ON A SUPPORT CONSISTING OF MAGNESIUM OXIDE AND CERIUM OXIDE FOR THE REDUCTION OF NO TO N2 WITH HYDROGEN UNDER NOx OXIDATION CONDITIONS**

PRESULFATIERTER UND PRENITRIERTER KATALYSATOR, ENHALTEND PLATINUM AUF TRÄGER BESTEHEND AUS MAGNESIUMOXID UND CEROXID FÜR DIE REDUKTION VON NO ZU N2 MIT WASSERSTOFF UNTER NOx-OXIDATIONSBEDINGUNGEN

CATALYSEUR CONTENANT DU PLATINE SUR UN SUPPORT A BASE D'OXYDE DE MAGNESIUM DE D'OXYDE DE CERIUM POUR LA REDUCTION DE NO A N2 AVEC DE L'HYDROGENE DANS DES CONDITIONS D'OXYDATION NOx

(84) Designated Contracting States:
**AT BE BG CH CY CZ DE DK EE ES FI FR GB GR HU IE IT LI LU MC NL PT SE SI SK TR**

(30) Priority: **15.02.2002 ES 200300068**

(43) Date of publication of application:
**10.11.2004 Bulletin 2004/46**

(73) Proprietors:
• **CONSEJO SUPERIOR DE INVESTIGACIONES CIENTIFICAS**
**E-28006 Madrid (ES)**
• **Universidad de Chipre**
**2016 Nicosia (CY)**

(72) Inventors:
• **EFSTATHIOU, Angelos M.**
**2016 Nicosia (CY)**

• **COSTA, Costas N.**
**2016 Nicosia (CY)**
• **GARCIA FIERRO, José Luis**
**28049 Madrid (ES)**

(74) Representative: **Ungria Lopez, Javier et al**
**Avda. Ramon y Cajal, 78**
**28043 Madrid (ES)**

(56) References cited:
**EP-A- 0 838 255          WO-A-91/08827**
**WO-A-97/02886          US-A- 4 857 499**

• **COSTA ET AL: 'An investigation of the NO/H2/O2 (Lean-deNOx) reaction on a highly active and selective Pt/Lao.5Ce0.5MnO3 catalyst' JOURNAL OF CATALYSIS vol. 197, 2001, pages 350 - 364, XP004432657**

**Description**

**FIELD OF THE TECHNIQUE**

This invention refers to a novel catalyst based on platinum, with excellent activity, stability and selectivity for reducing NO to $N_2$ by $H_2$ as reducing agent in the low temperature range 100-200 ˚C and in the presence of an excess of oxygen (e.g. 5 %vol), 5 %vol $H_2O$ and/or 20 ppm $SO_2$ in the reactor supply.

This catalyst can be used in the selective conversion of nitric oxide, produced in many industrial combustion processes, to $N_2$ gas. It is known that hydrogen is available in numerous industrial installations. Using the said catalyst, only a very small percentage of the available hydrogen is necessary for the reduction of NO to $N_2$ under strongly oxidizing conditions of $NO_x$ in the low temperature range 100-200 ˚C.

The selective catalytic reduction of NO with $NH_3$ ($NH_3$-SCR) in the presence of an excess of oxygen has exhibited great interest in the last three decades and has recently been reported and reviewed in the literature [1]. In this process, ammonia is used as reducing agent of nitrogen oxides and nitrogen and water are produced as reaction products. Vanadium pentoxide ($V_2O_5$) supported on oxides such as $TiO_2$, $Al_2O_3$ and $SiO_2$ and promoted with $WO_3$ constitutes an efficient catalyst used in industry [2]. This catalyst is active in the temperature range 250-450 ˚C [3]. Nevertheless, the toxicity and problems of handling ammonia [1,4] constitute the main obstacles preventing the use of this technology by the general public, and at the same time it seems that problems deriving from leaks of unconverted $NH_3$ to the environment, corrosion and fouling of equipment, poisoning of the catalyst by $SO_2$, and high running cost cannot be solved with the current technology. The automobile industry never applied the $NH_3$-SCR process. This is primarily due to the absence of $NH_3$ in the exhaust gases of automobiles and the marked deactivation of the $NH_3$-SCR catalyst ($V_2O_5$-$WO_3$/$TiO_2$) in the presence of excess oxygen in the reaction stream [5], the case of automobiles with diesel engines.

Nevertheless, the $NH_3$-SCR process is the best catalytic technology known for the elimination of $NO_x$ in stationary sources and it is largely used as a decontamination process in conventional thermal power stations.

The selective catalytic reduction of NO with hydrocarbons (HC-SCR) has been extensively studied in recent years as a potential competitor of the $NH_3$-SCR process [1,7]. The main advantage of this catalytic reaction is the potential use of hydrocarbons as reducing species that can be found in the exhaust gases of combustion processes operating under clearly oxidizing conditions of $NO_x$. The catalysts that have attracted the attention of the HC-SCR process of NO can be divided into three main groups: (a) supported noble metals; (b) zeolites exchanged with metal ions; and (c) metal oxide catalysts [3]. Among these materials, supported noble metals have shown the best and only catalytic behaviour for the reduction of NO with hydrocarbons under oxidation conditions at reaction temperatures as low as 120-250 ˚C [8-16]. Also, it was found that these catalysts are more resistant to deactivation in the presence of water and/or $SO_2$ [17,18]. Nevertheless, in spite of their exceptional activity in this low temperature region, supported Pt and Pd catalysts present low values of selectivity towards $N_2$ [19,20] and a relatively narrow range of operating temperatures. On the contrary, zeolites exchanged with metal ions are very active and selective for the SCR of NO with hydrocarbons at relatively low temperatures. However, these catalysts present an even narrower operating temperature range compared to that of supported noble metals. Also, the activity of zeolitic catalysts exchanged with metal ions drastically diminishes in the presence of water. Finally, catalysts based on metal oxides showed low activity but high selectivity towards $N_2$ for HC-SCR processes of NO but at temperatures above 500 ˚C.

Current concerns regarding carbon dioxide emissions into the atmosphere and the problems resulting from the use of $NH_3$ as reducing agent [21] have encouraged a search for suitable molecules different from hydrocarbons for the selective catalytic reduction of NO in gaseous streams derived from combustion processes. It has been reported that hydrogen is a very effective reducing agent for the reaction NO/$H_2$ [22-32] and can potentially be used for reducing $NO_x$ emissions derived from stationary combustion sources. Hydrogen is currently used in industrial processes of petroleum refining such as hydrotreatment and hydrocracking [33-35], the production of methanol [36,37], the conversion of methanol to gasoline [38,39] and the synthesis of ammonia [40,41] and hydrocarbons (Fischer-Tropsch process) [42-44]. Therefore, hydrogen is available in many industrial installations wherein various processes are operated requiring a heat input. Furthermore, the progressive demand for hydrogen with a growth rate of approximately 10 % a year must be added [45], which means that the availability in the industrial sector will be increasing further in the coming years.

Therefore, an $H_2$-SCR catalytic technology of $NO_x$ can be considered as an important qualitative leap and compared to $NH_3$-SCR and HC-SCR catalytic processes. For the latter process it should be noted that excess of hydrocarbon required ends up polluting the environment, which must be burned but it will produce more $CO_2$.

It is important to mention here that in the absence of oxygen in the supply stream hydrogen cannot be regarded as a selective reducing agent due to the fact that other undesired products are usually formed such as $N_2O$ and $NH_3$. Just a few attempts have been reported to reduce NO with $H_2$ under oxygen-rich conditions [46-50] and this is due to the fact that hydrogen displays high combustion rates with $O_2$ to form $H_2O$ under the applied reaction conditions. The strong competition among adsorbed species of $NO_x$, oxygen and hydrogen under the applied reaction conditions [51,52] makes the development of suitable catalytic systems a difficult task.

It has been found that platinum supported catalysts, such as $Pt/Al_2O_3$ and $Pt/SiO_2$, are the most active for the reaction $NO/H_2/O_2$ under clearly oxidizing conditions of $NO_x$ at low temperatures (T < 200 °C) [46-50]. Yokota *et al.* [49] reported catalytic activity results in the reduction of NO with $H_2$ in the presence of $O_2$ on a $Pt$-$Mo$-$Na/SiO_2$ catalyst, while Frank *et al.* [46] reported kinetic results of the reaction $NO/H_2/O_2$ on a $Pt$-$Mo$-$Co/\alpha$-$Al_2O_3$ catalyst. The last two catalysts produced substantially lower quantities of $N_2O$ (selectivity to $N_2$ close to 75 %) than the conventional Pt supported catalysts (e.g., $Pt/Al_2O_3$, $SiO_2$), which present lower selectivity levels to $N_2$ ($S_{N2}$ = 40-60 %). On the other hand, it has been documented [49] that the catalyst $Pt$-$Mo$-$Na/SiO_2$ presents a relatively low stability under clearly oxidizing conditions in the presence of water, while the catalysts $Pt$-$Mo$-$Na$-$/SiO_2$ and $Pt$-$Mo$-$Co/\alpha$-$Al_2O_3$ present a relatively narrow operating temperature range. In a previous work [53] we have reported reduction results of NO with $H_2$ in the presence of excess $O_2$, obtained on a platinum catalyst supported on a perovskite type substrate. This catalyst turned out to be the most active and selective of the platinum supported catalysts reported in the literature for the reaction $NO/H_2/O_2$ up to the date of publication. In spite of the fact that the catalyst $Pt/La$-$Ce$-$Mn$-$O$ turned out to be very active and selective in a wide temperature range compared to other platinum based catalysts [53], this operating temperature range becomes much lower than that shown by the inventive $Pt/MgO$-$CeO_2$ catalyst.

The results described above reflect the general agreement of scientists that the support has a crucial effect on the activity and selectivity of platinum supported catalysts in the reduction of NO with $H_2$ in the presence of an excess of oxygen [1].

On the basis of everything that has been stated, it is of industrial interest to develop an improved catalyst based on platinum with the following characteristics for the reaction $NO/H_2/O_2$:

(a) High activity and selectivity at low reaction temperatures (e.g. below 200 °C) with $N_2$ yields greater than 90 %.
(b) A broad operating temperature range (e.g. 100-200 °C) with appreciable values of NO conversion and selectivity to $N_2$.
(c) Prolonged stability during the course of operation.
(d) Stability in the presence of at least 5 %vol $H_2O$ and $SO_2$ in the range 1-20 ppmv.

**DESCRIPTION OF THE INVENTION**

The present invention refers to a catalyst comprising Pt in an amount between 0.1 and 2 wt% included, the latter dispersed on a pre-sulphated mixed metal oxide support of Mg and Ce. The preferred metal content is 0.1-0.5 wt% Pt highly dispersed on the mixed oxide support of Mg and Ce, by means of damp impregnation or sol-gel techniques.

According to a particular embodiment, the catalyst comprises the mixed oxide 50 wt% MgO - 50 wt% $CeO_2$, previously pre-sulphated as support.

According to an additional particular embodiment, the catalyst further contains more than one of the following compounds: Pt, MgO, $CeO_2$, $MgSO_4$ and $Ce_2(SO_4)_3$, which are all possibly formed in the catalyst $Pt/s$-$MgO$-$CeO_2$ under the conditions of preparation, calcination and reaction.

According to a particular embodiment of the process, the technique of damp impregnation results in a catalyst with crystals of platinum deposited on the MgO and $CeO_2$ phases in a proportion 1:1, the latter impregnated with an aqueous solution containing the desired quantity of nitrate precursor, evaporation of the excess water, drying, grinding and heating at 300 °C in an air flow for 2 h. The resulting product is then impregnated with an aqueous solution containing the desired quantity of sulphate precursor, evaporation of water, drying, grinding and calcination at 600 °C in an air flow for 2 h. The resulting mixed sulphated oxide is impregnated with an aqueous solution containing the desired quantity of platinum precursor, evaporation of water, drying, grinding and heating at 500 °C under air flow until complete decomposition of the platinum precursor, and reduction of the catalyst at 300 °C in $H_2$ flow for at least 2 h, thereby achieving a dispersion of 90 % in the 0.1 %wt $Pt/s$-50%$MgO$-$CeO_2$ catalyst.

The present invention also refers to a process for preparing a catalyst comprising Pt in an amount between 0.1 and 2.0 wt% included, dispersed on a pre-nitrated and pre-sulphated mixed metal oxide support of Mg and Ce, said process comprising:

- impregnating a mixture of MgO and $CeO_2$ support with an aqueous solution of $NH_4NO_3$, followed by $(NH_4)_2SO_4$,
- calcination in air at 600°C for at least 2 hours for complete elimination of ammonium cation and stabilization of the structure of support,
- impregnating the sulfated mixture of MgO and $CeO_2$ support phases with an aqueous solution of the platinum precursor,
- calcination in air at 600°C for at least 2 hours for complete transformation of platinum precursor into platinum oxide and
- reducing with hydrogen at 300°C for at least 2 hours to fully reduce platinum oxide to metallic platinum.

According to a particular embodiment the process for obtaining a catalyst with crystals of platinum deposited on the MgO and $CeO_2$ phases in a proportion 1:1, comprises

- impregnating MgO and $CeO_2$ phases with an aqueous solution containing the desired quantity of nitrate precursor,
- evaporation of the excess water, drying, grinding and heating at 300 ˚C in an air flow for 2 h,
- impregnating the resulting product with an aqueous solution containing the desired quantity of sulphate precursor,
- evaporation of water, drying, grinding and calcination at 600 ˚C in an air flow for 2 h
- impregnating the resulting mixed sulphated oxide with an aqueous solution containing the desired quantity of platinum precursor,
- evaporation of water, drying, grinding and heating at 600 ˚C in an air flow until complete decomposition of the platinum precursor and
- reduction of the catalyst at 300 ˚C in $H_2$ flow for at least 2 h, thereby achieving a dispersion of 80 % in the catalyst 0.1 %wt Pt/s-50%MgO-$CeO_2$.

According to an additional particular embodiment, a surface compound of magnesium is formed by interaction between the species present in the gaseous phase under the reaction conditions and an oxide of magnesium present.
According to an additional particular embodiment, a surface compound of cerium is formed by interaction between the species present in the gaseous phase under the reaction conditions and an oxide of cerium present.
According to an additional particular embodiment, a surface compound of platinum is formed by interaction between the species present in the gaseous phase under the reaction conditions and metallic platinum present.
The present invention also refers to the reduction of nitrogen dioxide and/or mixture of nitric oxide and nitrogen dioxide to $N_2$ gas using hydrogen as reducing agent, in the presence of the catalysts described herein.
The catalysts can be used in any kind of reactor employed industrially in such processes, e.g., fixed bed reactor, monolith type reactor, etc., for the reduction of nitric oxide, nitrogen dioxide or mixture of nitric oxide and nitrogen dioxide to $N_2$ gas using hydrogen as reducing agent and in the presence and/or absence of oxygen and/or water.
The present invention also refers to a method of reducing a chemical compound selected from the group consisting of NO, $NO_2$ and/or a mixture of NO and $NO_2$ to $N_2$ gas using hydrogen ($H_2$) as reducing agent in the presence of oxygen ($O_2$), and also in the presence of other gases, for example $H_2O$ and $SO_2$, by a catalyst comprising Pt in an amount between 0.1 and 2.0 wt% included, dispersed on a pre-sulphated mixed metal oxide support of Mg and Ce.
According to a particular embodiment in the mentioned method, a reactor selected from the group consisting of a fixed bed reactor and a monolith type reactor can be used.
This invention describes a novel catalyst based on platinum, with excellent activity, selectivity and stability for reducing nitric oxide using hydrogen as reducing agent in the low temperature range 100-200 ˚C and in the presence of an excess of oxygen. The catalyst consists of platinum crystals in contact with the two phases of MgO and $CeO_2$ or in the form of platinum supported on a MgO-$CeO_2$ mixed oxide support previously sulphated in a selective manner. Prior to the impregnation of the oxide phases with the platinum precursor, the pre-sulphation of support (50%MgO-$CeO_2$) is necessary. This is achieved by impregnation of the support with an aqueous solution of $NH_4NO_3$ followed by $(NH_4)_2SO_4$ as described in Example 1. Calcination of the resulting solid in air at 600˚C for at least 2 h is necessary for the complete elimination of the ammonium cation and stabilization of the surface structure of the support. The catalyst 0.1 wt% Pt/50%MgO-$CeO_2$ can be prepared by any of the means known by practitioners of this art, including the technique of wet impregnation of the pre-sulphated support with an aqueous solution of the Pt precursor (e.g., solution of hexachloroplatinic acid ($H_2PtCl_6$)). Following the preparation of the Pt supported catalyst at least 2 h of calcination in air at 600 ˚C are necessary for complete transformation of the platinum precursor into platinum oxide. Finally, a reduction has to be carried out with hydrogen at 300 ˚C for at least 2 h in order to fully reduce the platinum oxide to metallic platinum. The resulting catalytic surface is very stable, without any deactivation being observed during 24 h of reaction or more, even in the presence of 5 %vol $H_2O$ and/or 20 ppm $SO_2$. Hereinafter, the catalyst described above will be termed Pt/s-MgO-$CeO_2$, where s indicates the sulphated support 50%MgO-$CeO_2$. Virtually complete conversion of NO is obtained at 150 ˚C on this catalyst in a contact time of 0.045. s. The industrial reactors of $NH_3$-SCR of NO which use industrial catalysts operate under typical surface contact times of 0.08-0.4 s [1,54-56]. By means of applying this new catalyst based on Pt (e.g., 0.1 %wt Pt/s-50%MgO-$CeO_2$), the conversion of NO to $N_2$ with $H_2$ under clearly oxidizing conditions of $NO_x$ can be considered at a broader scale.
This invention describes a novel catalyst based on platinum, with excellent activity, selectivity and stability for reducing nitric oxide to nitrogen using hydrogen as reducing agent in the low temperature range 100-200 ˚C and in the presence of an excess of oxygen, 5 %vol $H_2O$ and/or 20 ppm $SO_2$ in the feed stream. The catalyst was prepared by the wet impregnation method previously described. Identical catalysts can be prepared using other preparation techniques known by practitioners of this art, and other metallic precursors such as platinum nitrate, platinum acetyl-acetonate, platinum chloride, etc. Nevertheless, it has been found in this work that the preparation of the catalyst mentioned above using the sol-gel method [57] provided better results in terms of catalytic activity and selectivity to $N_2$ in the reaction

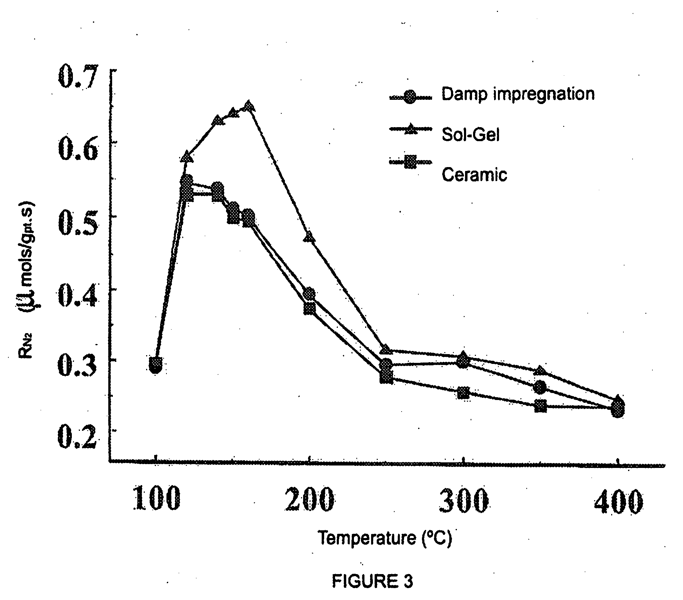

$NO/H_2/O_2$ (see Fig. 3). Eight different mixtures of $MgO-CeO_2$ were used as supports with a magnesium content (x %wt MgO) varying from 0 to 100%.

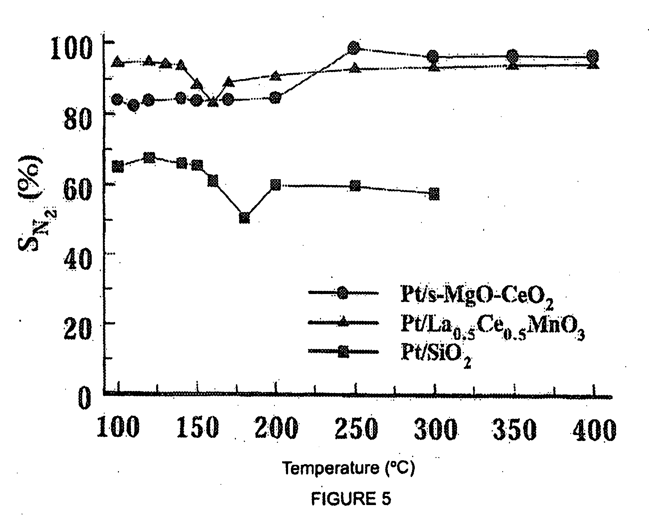

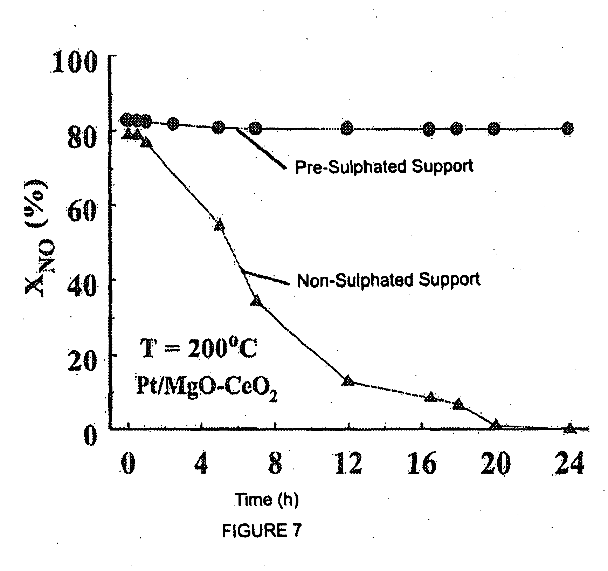

In this work it was found that the pre-sulphated $MgO-CeO_2$ mixed oxide (see Example 1) is essential for achieving high stability towards deactivation by $SO_2$ (Example 8, Fig. 7). It must be noted here that the non-sulphated catalyst 0.1 %wt $Pt/MgO-CeO_2$ showed selectivity values towards $N_2$ in the range 65-72 %, while the pre-sulphated catalyst showed higher selectivity values towards $N_2$ (greater than 80 %, see Example 6 and Fig. 5).

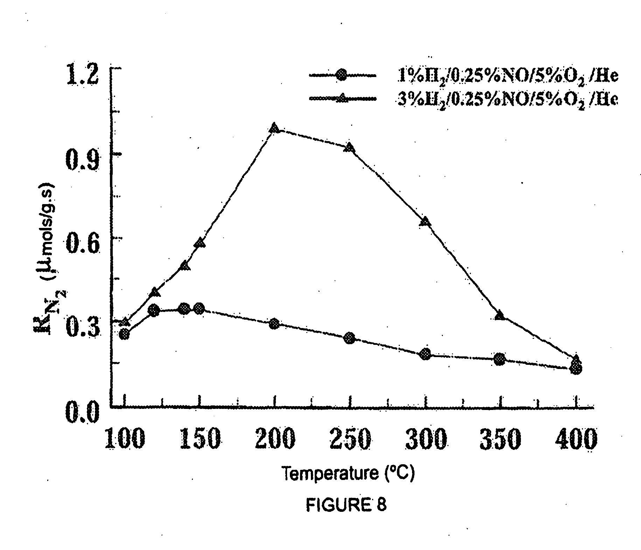

In this work it was also found that the nature of the support has a large effect on the activity and selectivity of the corresponding Pt supported catalyst. While Pt supported on $SiO_2$ presents selectivity values lower than 60 % (Fig. 5, ref. [58]), the catalyst $Pt/s-50\%MgO-CeO_2$ exhibits selectivities higher than 80 %. Also, the integral production rate of nitrogen obtained on the catalyst $Pt/s-50\%MgO-CeO_2$ is slightly higher than that found with the catalyst $Pt/La_{0.5}Ce_{0.5}MnO_3$ [53] though close to 50 % higher than that obtained on $Pt/SiO_2$ [58]. Nevertheless, the catalyst $Pt/s-50\%MgO-CeO_2$ presents an extraordinarily broad operating temperature range ($\Delta T$, see Table 1), much broader than that obtained on the catalysts $Pt/SiO_2$ and $Pt/La_{0.5}Ce_{0.5}MnO_3$. It must be noted that the latter catalyst is the most active and selective of all the ones reported for the reaction $NO/H_2/O_2$ under $NO_x$ oxidation conditions [53]. The integral production rate of nitrogen on the catalyst $Pt/MgO-CeO_2$ can even be raised by means of increasing the partial pressure of hydrogen. In particular, the integral production rate of $N_2$ on the said catalyst can be raised up to almost four times when the partial pressure of $H_2$ is increased from 1 to 3 vol % at 200 ˚C (Example 9. Fig. 8).

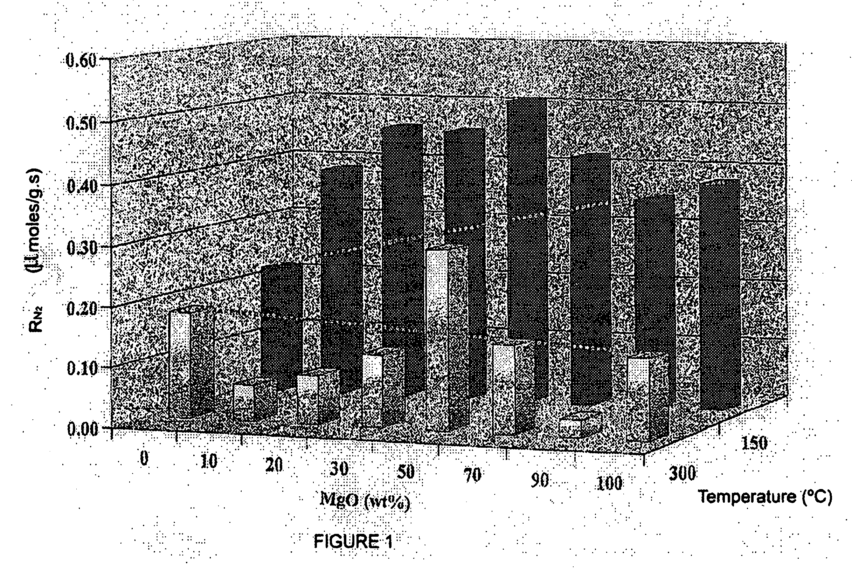

The ratio of MgO to $CeO_2$ is an important factor which affects the catalytic behaviour (reaction rate and $N_2$ selectivity) of the catalyst $Pt/MgO-CeO_2$. It is shown (see Example 2, Fig. 1) that the catalyst with a weight ratio of MgO to $CeO_2$ equal to one presents the highest integral production rate of $N_2$ at both low and high reaction temperatures. As shown in Fig. 1, almost all the compositions present higher reaction rates than those predicted by the rule of mixture (dotted line) at 150 ˚C (Example 2, Eq. [1]). Thus, a positive synergetic effect results. Nevertheless, when the reaction temperature rises to 300 ˚C, the behaviour of the reaction rate towards the content of MgO is different (Fig. 1). All the catalysts except $Pt/50\%MgO-CeO_2$ present experimental rates substantially lower than those expected from the law of mixture (a negative synergetic effect is seen). In the case of the catalyst $Pt/50\%MgO-CeO_2$ an important positive synergetic effect is obtained at both temperatures (Fig. 1).

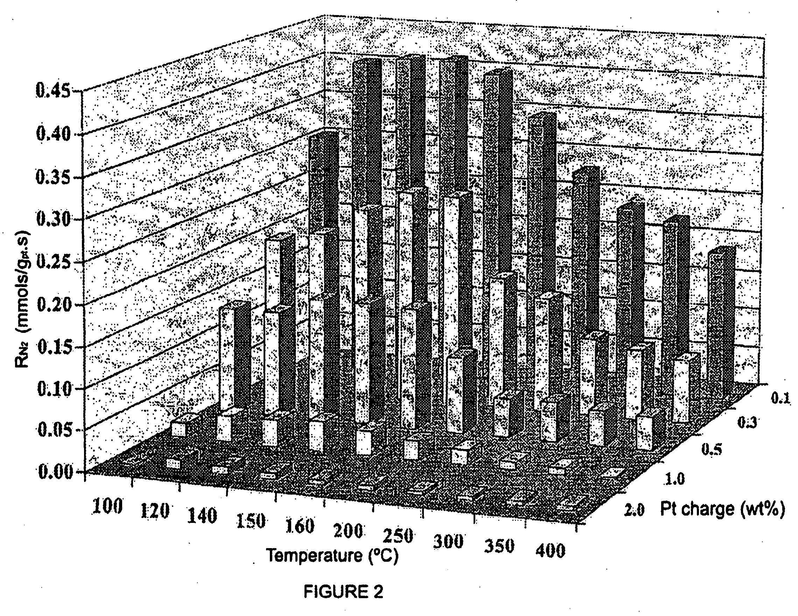

The platinum content of the catalyst $Pt/MgO-CeO_2$ is a crucial factor affecting its catalytic behaviour. As shown in Fig. 2 (see also Example 3), the catalyst with the least metallic content (0.1 %wt) presents the highest integral reaction rate referring to a gram of metallic Pt, compared to that of catalysts with higher metallic contents. The reaction rate of $N_2$ formation decreases with an increase in the platinum content. Since catalysts with low metal contents have high dispersions, it can be concluded that the reduction of NO with $H_2$ in the presence of excess $O_2$ occurs favourably on the surface of small Pt metal particles. Galvano and Paravano [59] reported very similar results on different gold supported catalysts for the reaction $NO/H_2$. These authors found that the selectivity of the reaction $NO/H_2$ towards $N_2$ decreased with the increase of the particle size of gold for catalysts supported on MgO and $Al_2O_3$.

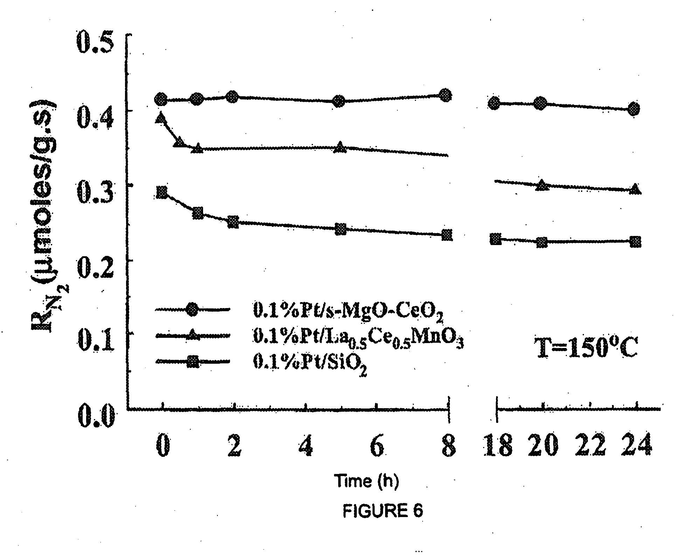

The catalyst $Pt/s-50\%MgO-CeO_2$ showed excellent stability with the reaction time In the presence of 5 %vol $H_2O$ in the feed stream (Example 7, Fig. 6), which is higher than that observed with the catalysts $Pt/SiO_2$ and $Pt/La_{0.5}Ce_{0.5}MnO_3$ previously Investigated [53,58]. Constant production rates of $N_2$ were observed even after 24 h on stream over the catalyst 0.1 %wt $Pt/s-50\%MgO-CeO_2$. On the other hand, the integral production rate of $N_2$ obtained with the catalysts $Pt/La_{0.5}Ce_{0.5}MnO_3$ and $Pt/SiO_2$ fell substantially during the first 2 hours on stream and continued to fall, though more slowly, during longer times on stream (Fig. 6). This is typical behaviour of many de-$NO_x$ catalysts that have been reported when water is present In the feed stream [3], which means that the catalytic stability results reported here are of major practical importance.

As noted above, the fresh catalyst $Pt/MgO-CeO_2$ becomes deactivated in the presence of 20 ppm $SO_2$ in the feed stream (Fig. 7). This is a well-known phenomenon in de-$NO_x$ catalysts. The deactivation of the catalyst $Pt/MgO-CeO_2$ probably occurs by adsorption and reaction of gaseous $SO_2$ with the oxide phases of the catalyst, giving rise to a progressive sulphation of the support (e.g., $MgSO_4$, $Ce_2(SO_4)_3$). These processes in turn probably cause an irreversible poisoning of the active centres responsible for the formation of nitrate/nitrite species [50.60]. Nevertheless, when the support $MgO-CeO_2$ is pre-sulphated beforehand (see Example 1 and Fig. 7) the catalyst $Pt/s-MgO-CeO_2$ presents excellent stability in the presence of $SO_2$. This implies that during pre-sulphation of the support, the nitrate/nitrite formation centres do not become poisoned and the adsorption of $SO_2$ occurs selectively on centres that are not active for the reaction $NO/H_2/O_2$ under $NO_x$ oxidation conditions. Moreover, it is possible that adsorption of $SO_2$ In those centres also inhibits sulphation of the support and the development of $MgSO_4$ and/or $Ce_2(SO_4)_3$ crystalline phases under reaction conditions. The effective sulphation of the solid $MgO-CeO_2$ can also be assured by wet impregnation of the original sample with a nitrate solution. The results obtained in this case are the same as those described above. Hodjati et al. [61] also reported a similar behaviour on a de-$NO_x$ $BaSnO_3$ catalyst.

The present Invention, e.g., the pre-nitrated and pre-sulphated catalyst $0.1\%Pt/s-50\%MgO-CeO_2$, is a novel catalyst wherein the main differences with respect to catalysts based on noble metals and other de-$NO_x$ catalysts reported for the reaction $NO/H_2/O_2$ are as follows:

- Catalysts based on noble metals have a high cost and limited availability of the noble metal. Nevertheless, owing to the high activity of the invented catalyst $Pt/s-MgO-CeO_2$ (Table 1) much lower platinum contents can be used (e.g., 0.1 %wt) instead of higher noble metal content (e.g. 1 %wt) normally used in industrial de-$NO_x$ applications. Thus, the cost of this catalytic system can be substantially reduced.

- In spite of the fact that catalysts based on noble metals are less prone to become deactivated in the presence of water and/or $SO_2$ [17,18], such catalysts have not been reported to be stable in the presence of water and/or $SO_2$ in the reaction $NO/H_2/O_2$ under $NO_x$ oxidation conditions. Nevertheless, the invented catalyst $Pt/s-MgO-CeO_2$ is very stable in the presence of 5 %vol water or 20 ppmv $SO_2$ if the actual sulphation method is followed (Example 1, Fig. 7).

- Metal oxide catalysts present high selectivity values to $N_2$ in the reaction $NO/H_2/O_2$, very similar to those obtained with the invented catalyst $Pt/s-MgO-CeO_2$. Nevertheless, oxide catalysts are much less active when compared with the latter noble metal-based catalyst. Also, metal oxide catalysts are active only at temperatures higher than 400 °C, while the catalyst $Pt/s-MgO-CeO_2$ presents a conversion maximum of NO at 150 °C. Thus, metal oxide catalysts cannot be regarded as candidates for de-$NO_x$ applications under low temperature oxidation conditions.

- Zeolites exchanged with metallic ions are very active and selective for the SCR of NO with hydrocarbons at relatively low temperatures. Nevertheless, the catalysts present a very narrow operating temperature range compared to the invented catalyst $Pt/s-MgO-CeO_2$. Moreover, the activity of catalysts exchanged with metallic ions falls sharply in the presence of water and/or $SO_2$, while the invented catalyst $Pt/s-MgO-CeO_2$ remains stable in the presence of water and/or $SO_2$.

- The invented catalyst $Pt/s-MgO-CeO_2$ is the most active, selective and stable reported to date for the reaction $NO/H_2/O_2$ under $NO_x$ oxidation conditions and in the presence of $H_2O$ and/or $SO_2$. Also, this catalyst presents the broadest window of operating temperatures reported for said reaction (Example 5, Table 1).

- $NH_3$-SCR is widely used as de-pollution technology for the elimination of $NO_x$ from stationary sources, mainly in conventional thermal power stations [1]. On the other hand, the problems of toxicity and handling of ammonia [1,4,21] constitute major obstacles against the use of this technology by the general public. In addition, problems related with $NH_3$ corrosion and poisoning of catalysts by $SO_2$ seem difficult to solve. Yet, an SCR technology for $NO_x$ based on hydrogen ($H_2$-SCR) can eliminate most of the problems that have been enumerated.

- Hydrogen is widely used in industry [33-45]. In fact, the availability of hydrogen in industry is much greater compared to that of ammonia [45].

The differences discussed above strongly support the view that $H_2$-SCR catalytic technology for $NO_x$ of the present invention is new and innovative.

## EXAMPLES OF EMBODIMENT OF THE INVENTION

The following examples represent a more detailed description of the invention. There can be no doubt that this detailed description is made by way of illustration only and does not limit the extent of the invention since there are many variations that can be made without detracting from the spirit of this invention.

## Example 1

This example illustrates the synthesis of platinum-based catalysts, supported on $MgO-CeO_2$ mixed oxides. Pre-nitrated and pre-sulphated $Pt/s-MgO-CeO_2$ catalysts were prepared by means of the wet impregnation method as follows:

1 g of MgO (Aldrich 34,279-3, 99+%) and 1 g of $CeO_2$ (Aldrich 34,295-5, 99.9%) were impregnated with 50 ml of an aqueous solution containing 7.1 mg (90 $\mu$mols) of $NH_4NO_3$ (Aldrich, ultra-pure). The water was evaporated with continuous stirring and the residue was dried at 100 °C for 4 h. The residue was then sieved and heated at 300 °C in the presence of air for 2 h in order to fully decompose and remove from the catalyst surface the ammonium cations. This process was followed in order to ensure the protection from sulphation of the centres of adsorption of nitrates by the support. The resulting solid was impregnated with 50 ml of an aqueous solution containing 24 mg (90 $\mu$mols) of $(NH_4)_2SO_4$ (Aldrich, ultra-pure). The water was then evaporated with continuous stirring and the residue was dried at 100 °C for 4 h. The residue was sieved and heated In air at 600°C for 2 h and then cooled to room temperature. 2 g of sulphated support were then impregnated with an aqueous solution containing the desired quantity of hexachloroplatinic acid (Aldrich, 26,258-7). The excess of water was evaporated with continuous stirring and the residue was dried at 80 °C for 24 h. The dry residue was sieved and heated at 600°C In a flow of air for at least 2 h In order to completely decompose the hexachloroplatinic acid. The catalyst was then reduced in a flow of $H_2$ at 300 °C for at least 2 h. The content of metallic platinum varied in the range 0.1-2.0 % by weight.

Two catalysts 0.5 %wt Pt /50%$MgO-CeO_2$ were also prepared by the sol-gel procedure following the experimental conditions described by Balakrishnan et al. [57]. Weighed quantities of $Mg(OEt)_2$, $Ce(NO_3)_3$ and $Pt(NH_3)_2(NO_3)_2$ were dissolved In a solution of $EtOH/H_2O$ followed by continuous stirring and heating at 60 ˚C until a gel was formed. The mixed oxide support 50 %wt $MgO-CeO_2$ was also prepared by the ceramic method [62] using pure oxides as starting materials. 0.5 %wt of Pt was then deposited on the resulting solid by means of wet impregnation.

The dispersion of platinum in the Pt/MgO-CeO₂ catalysts was measured by means of $H_2$ chemisorption at 25 ˚C followed by thermal programmed desorption (TPD) in He flow. Prior to the $H_2$ TPD, the sample was purged in He for 45 min at room temperature. A dispersion of platinum of 83% in the 0.1 %wt Pt/50%MgO-CeO₂ catalyst was determined.

**Example 2**

The integral nitrogen production rates were determined for the reaction $NO/H_2/O_2$ on platinum supported catalysts In the range 100-400 ˚C as follows:

150 mg of catalyst sample were placed in a fixed bed quartz micro-reactor. The reactor supply consisted of 0.25 %vol NO, 1 %vol $H_2$, 5 %vol $O_2$ and 93.75 %vol He. A flow rate of 100 ml(STP)/min was used giving a GHSV of approximately 80,000 $h^{-1}$. Figure 1 shows the effect of the content of MgO (x. %wt) in the 0.5 %wt Pt/MgO-CeO₂ solid on the production of $N_2$ per gram of catalyst obtained after steady state was achieved in the reaction $NO/H_2/O_2$ at 150 and 300 ˚C. It can be clearly seen in Fig. 1 that the Pt supported catalyst with a MgO content of 50 wt% presents higher $N_2$ production rates at the two stated temperatures. The dotted lines represent the $N_2$ production rates predicted by the rule of mixture given by the following equation:

$$R_m = (x/100).R_{MgO} + (1 - (x/100)) . R_{CeO2} \quad (\mu mols/g.s) \quad [1]$$

Equation [1] permits the reaction rate ($R_m$) to be calculated for the two catalytic phases of Pt/CeO₂ and Pt/MgO based on the Individual rates of each catalytic phase and the content x %wt of the phase in the mixture. It there does not exist any cooperation (synergy) between the two phases, then the experimental reaction rate observed on the mixture of the two solids must also be predicted by Eq. [1]. As seen in Fig. 1, all the catalysts except 0.5 %wt Pt/90%MgO-CeO₂ present higher reaction rates than those predicted by the rule of mixture (Eq. [1]) at 150 ˚C. Thus, a positive synergetic effect is observed. Nevertheless, when the reaction temperature increases to 300˚C a different behaviour is seen in the reaction rate regarding the content of MgO (Fig 1). All the catalysts except Pt/50%MgO-CeO₂ present substantially lower experimental rates than those predicted by the rule of mixture (a negative synergetic effect is observed). The case of the catalyst 0.5 %wt Pt/50%MgO-CeO₂ is emphasized, which presents a large positive synergetic effect at both temperatures.

**Example 3**

In this example, the influence of the platinum content (wt%) on the Integral $N_2$ production rate was investigated in the range 100-400 ˚C on the catalytic system Pt/50% MgO-CeO₂.

The feed consisted of 0.25 %vol NO, 1 %vol $H_2$, 5 %vol $O_2$ and 93.75%vol He. 100 mg of each sample was used in these experiments, while the total flow rate was kept at 100 ml(STP)/min giving a GHSV of approximately 120,000 $h^{-1}$. Figure 2 presents the integral $N_2$ production rate per gram of total platinum on the sample as a function of temperature for five platinum contents: 0.1, 0.3, 0.5, 1 and 2 %wt. As seen in Fig. 2, the $N_2$ production rate falls drastically with the increase in platinum content at any temperature in the range 100-400 ˚C. Thus, it can be said that the reduction of NO with $H_2$ In the presence of excess $O_2$ on the catalytic system Pt/50% MgO-CeO₂ is favoured at low platinum contents.

**Example 4**

This example illustrates the effect of the preparation method on the temperature profile of $N_2$ integral production rate for the reaction $NO/H_2/O_2$ under $NO_x$ oxidation conditions on the catalysts 0.5 %wt Pt/50%MgO-CeO₂. 100 mg of each catalyst, 0.5 %wt Pt/50%MgO-CeO₂. prepared by wet impregnation, sol-gel and ceramic process methods, were used.

The reaction conditions used in this example are the same as those employed in Example 3. Figure 3 presents the temperature profile of the $N_2$ integral production rate per gram of total platinum obtained in the three catalysts mentioned for the reaction $NO/H_2/O_2$ in the range 100-400 ˚C. It is evident from Fig. 3 that the catalyst 0.5 %wt Pt/50%MgO-CeO₂ prepared by the sol-gel method presents substantially higher $N_2$ production rates in the range 120-200 ˚C compared to the catalysts prepared by the ceramic and wet impregnation methods. The last two solids show a very similar catalytic behaviour in the range 100-400 ˚C. Thus, the sol-gel method is preferred for the preparation of the catalyst Pt/50%MgO-CeO$_2$ instead of the ceramic or wet impregnation methods described previously.

Table 1 below complies the catalytic behaviour of various Pt supported catalysts for the reaction NO/H$_2$/O$_2$ under NO$_x$ oxidation conditions reported In the open literature. The corresponding results obtained with the catalyst 0.1 %wt Pt/s-50%MgO-CeO$_2$ for said reaction are also included in Table 1. In this table, $\Delta T$ is the temperature range wherein X$_{NO}$ Is greater than 1/2 of the maximum observed conversion of NO. The latter parameter could be used for defining the quality of the operation temperature window. For example, a high value of $\Delta T$ corresponds to the best desired operation of the catalyst under practical conditions. Table 1 also compiles the integral N$_2$ production rate per gram of total Pt (R$_{N2}$) evaluated in accordance with the obtained values of X$_{NO}$ and S$_{N2}$ for each catalyst. Moreover, the mean conversion value of NO ($X_{NO}$) in the range 100-400 ˚C is also included in Table 1. This parameter was calculated using the following formula:

$$\overline{X}_{NO} = \frac{\int_{100}^{400} X_{NO}\, dT}{400-100} = \frac{\int_{100}^{400} X_{NO}\, dT}{300} \tag{2}$$

A similar formula was also used for calculating the mean value of selectivity to N$_2$ which is also given in Table 1.

$$\overline{S}_{N_2} = \frac{\int_{T_1}^{T_2} S_{N_2}\, dT}{T_2 - T_1} \tag{3}$$

In Eq. [3], T$_1$ and T$_2$ are the highest and lowest temperatures, respectively, where catalytic activity is measured.

In accordance with the results of Table 1, the present catalyst 0.1 %wt Pt/s-50%MgO-CeO$_2$ Is the best in terms of catalytic behaviour among all tabulated catalysts. Since the reaction orders with respect to the three reactants are not expected to be greater than 1.5, it is evident from the data of Table 1 that the catalyst 0.1 %wt Pt/s-50%MgO-CeO$_2$ presents the highest activity, selectivity and operation temperature window ($\Delta T$) ever reported for the reaction NO/H$_2$/O$_2$. Nevertheless, the comparison between the catalysts Pt/s-MgO-CeO$_2$, Pt/La-Ce-Mn-O, Pt/Al$_2$O$_3$ and Pt/SiO$_2$ is direct when the same experimental conditions are used. The mean conversion value of NO increases by approximately 50 % when Pt is supported on the s-50%MgO-CeO$_2$ solid with respect to the La$_{0.5}$Ce$_{0.5}$MnO$_3$. The increase becomes even larger (230 %) if the comparison is made with the support SiO$_2$. Also, the mean value of selectivity to N$_2$ of 86.5 % obtained with the catalyst Pt/s-50% MgO-CeO$_2$ is the same as that obtained with the catalyst Pt/La$_{0.5}$Ce$_{0.5}$MnO$_3$ but is much greater than that obtained with the other catalysts reported in Table 1. Furthermore, the operation temperature window ($\Delta T$=190˚C) with the catalyst Pt/s-50% MgO-CeO$_2$ is, as far as we know, the highest value ever reported for the reaction NO/H$_2$/O$_2$ with 5 % H$_2$O in the feed stream.

**Example 5**

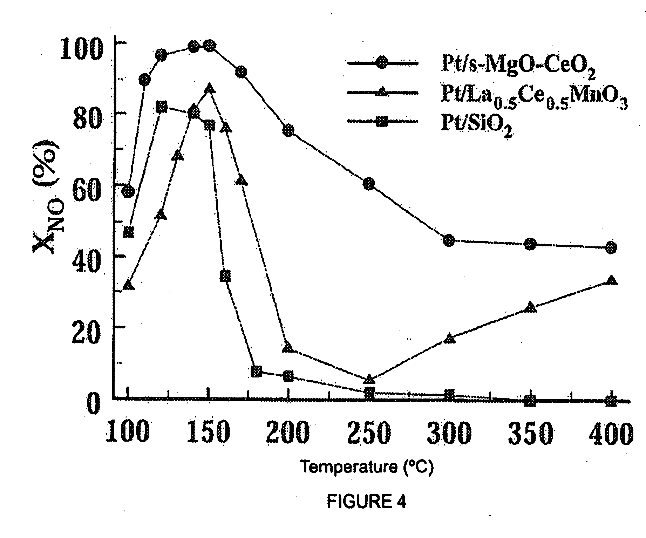

This example compares the activity (in terms of NO conversion, X$_{NO}$) of the catalysts 0.1 %wt Pt/s-50%MgO-CeO$_2$ (•), 0.1 %wt Pt/La$_{0.5}$Ce$_{0.5}$MnO$_3$ (▲) and 0.1 %wt Pt/SiO$_2$ (■) for the reaction NO/H$_2$/O$_2$ under NO$_x$ oxidation conditions with 5 %vol H$_2$O in the feed and in the range 100-400 ˚C. It was reported [53] that the catalyst 0.1 %wt Pt/La$_{0.5}$Ce$_{0.5}$MnO$_3$ has a higher activity than any other reported to date for the reaction NO/H$_2$/O$_2$ 150 mg of each catalyst were used and the feed stream consisted of 0.25 %vol NO, 1 %vol H$_2$, 5 %vol O$_2$, 5 %vol H$_2$O and 88.75 %vol He. A flow rate of 100 ml(STP)/min was used giving a GHSV of approximately 80,000 h$^{-1}$. As shown in Fig. 4. all the catalysts present maximum conversion values of NO (X$_{NO,max}$) in the range 120-150 ˚C. Nevertheless, the catalyst 0.1 %wt Ptls-50%MgO-CeO$_2$ shows significantly higher conversion values than the catalysts 0.1 %wt Pt/La$_{0.5}$Ce$_{0.5}$MnO$_3$ and 0.1 %wt Pt/SiO$_2$ at all temperatures in the range 100-400 ˚C. As clearly shown in Fig. 4 and Table 1, the catalyst 0.1 %wt Pt/s-50%MgO-CeO$_2$ presents values of $\Delta T$ two and three times higher than those observed with the catalysts 0.1 %wt Pt/La$_{0.5}$Ce$_{0.5}$MnO$_3$ and 0.1 %wt Pt/SiO$_2$, respectively (see Table 1). It can be seen that the catalyst Pt/SiO$_2$ exhibits virtually zero activity at temperatures higher than 250 ˚C. The value of $\Delta T$ obtained with the catalyst 0.1 %wt Pt/s-50%MgO-CeO$_2$ is the highest of all those reported in the literature (Table 1).

Table 1: Catalytic activity of various Pt supported catalysts for the reaction $NO/H_2/O_2$ in the temperature range 100-400 °C.

| Catalyst | Reaction Conditions | | | AT (°C)[a] | $R_{N2}$[b] (μmol/s.$g_m$) | $Tmax$[c] (°C) | $X_{NO.max}$ (%) | $S_{N2}$ (%) (at $X_{NO.max}$) | $S_{N2}$ (%)[d] | $X_{NO}$(%)[e] | Ref. |
|---|---|---|---|---|---|---|---|---|---|---|---|
| | NO (%) | $H_2$ (%) | $O_2$ (%) | | | | | | | | |
| 1% Pt-Mo-Co-/$Al_2O_3$ | 0.3 | 0.8 | 8.0 | 30 | 12.1 | 150 | 55 | 50 | 48.3 | 8.5 | [46] |
| 1%, Pt/$Al_2O_3$ | 0.05 | 02 | 6 | 40 | 10.1 | 140 | 50 | 60 | 12.9 | 10.0 | [47] |
| 1% Pt/$TiO_2$ | 0.1 | 0.3 | 5.0[f] | 50 | 2.2 | 100 | 50 | 21 | 19.3 | 9.0 | [48] |
| 0.1% Pt/$Al_2O_3$ | 0.25 | 1.0 | 5.0[g] | 45 | 285.8 | 125 | 66 | 60 | 54.8 | 12.3 | [53] |
| 0.1% Pt/$SIO_2$ | 0.25 | 1.0 | 5.0[g] | 56 | 240.1 | 120 | 80 | 65 | 60.7 | 192 | [58] |
| 0.1 % Pt/$La_{0.5}Ce_{0.5}MnO_3$ | 0.25 | 1.0 | 5.0[g] | 65 | 396.9 | 150 | 87 | 87 | 86.4 | 42.8 | [53] |
| 0.1% Pt/ s-50%MgO-$CeO_2$ | 0.25 | 1.0 | 5.0[g] | 190 | 418.2 | 150 | 99 | 84 | 86.5 | 66.5 | |

[a]$\Delta T$:Temperature range where $X_{NO}>X_{NOmax}/2$, [b]maximum rate of formation of $N_2$ (per gram of Pt), [c]Temperature at which the maximum conversion of NO is measured.

[d] $S_{N2}$ mean value of selectivity to $N_2$:

$T_1$ and $T_2$ are the lowest and highest temperatures, respectively, where the activity is measurable;

$$\bar{S}_{N_2} = \frac{\int_{T_1}^{T_2} S_{m}\,dT}{T_2 - T_1},$$

[e] $X_{NO}$ : mean conversion value of NO in the range 100-400 °C;

[f]10% $H_2O$ is present in the supply: [g] 5% $H_2O$ is present in the feed.

$$\bar{X}_{NO} = \frac{\int_{100}^{400} X_{NO}\,dT}{400-100} = \frac{\int_{100}^{400} X_{NO}\,dT}{300}$$

**Example 6**

This example compares the selectivity to $N_2$ ($S_{N2}$) of the reaction $NO/H_2/O_2$ under $NO_x$ oxidation conditions as a function of temperature and in the range 100-400 °C obtained with the catalysts 0.1 %wt Pt/s-50%MgO-CeO$_2$ (e), 0.1 %wt Pt/La$_{0.5}$Ce$_{0.5}$MnO$_3$ (▲) and 0.1 %wt Pt/SiO$_2$ (■). The experimental reaction conditions used in this example are the same as those used in Example 5.

As shown in Fig. 5, the catalysts Pt/s-50%MgO-CeO$_2$ and Pt/La$_{0.5}$Ce$_{0.5}$MnO$_3$ present high values of selectivity to $N_2$ in the range 100-400 °C. In particular, in the range 100-200 °C the catalyst Pt/s-50%MgO-CeO$_2$ shows values of selectivity to $N_2$ between 82 and 85 %, while the catalyst Pt/La$_{0.5}$Ce$_{0.5}$MnO$_3$ presents values of $S_{N2}$ in the range 82-90 %. In the range 250-400 °C the selectivity to $N_2$ Is approximately constant at levels of 96 and 93 % in the catalysts Pt/s-50%MgO-CeO$_2$ and Pt/La$_{0.5}$Ce$_{0.5}$MnO$_3$. respectively. As reported in Table 1, the catalyst Pt/s-50%MgO-CeO$_2$ presents a mean selectivity value to $N_2$ of 86.5 %, which is practically the same as that obtained with the catalyst Pt/La$_{0.5}$Ce$_{0.5}$MnO$_3$ (86.4 %). Much lower selectivity values (50-65 %) are obtained in the case of the catalyst Pt/SiO$_2$ which presents a mean value of $S_{N2}$ of 60.7 % (Table 1). The mean value of $S_{N2}$ obtained with the catalyst 0.1 %wt Pt/s-50%MgO-CeO$_2$ is the highest of all those reported in the literature to date (Table 1).

**Example 7**

In this example, the stability of the catalyst 0.1 %wt Pt/s-50%MgO-CeO$_2$ is studied for the reaction $NO/H_2/O_2/H_2O$ under $NO_x$ oxidation conditions at 150 °C.

The reaction conditions used in this example are the same as those used in Example 5. Figure 6 presents the variation in integral production rate of nitrogen per gram of catalyst as a function of time on stream for the catalysts 0.1 %wt Pt/s-50%MgO-CeO$_2$, 0.1 %wt Pt/La$_{0.5}$Ce$_{0.5}$MnO$_3$ and 0.1 %wt Pt/SiO$_2$. As shown in Fig. 6, the integral production rate of $N_2$ obtained with the catalysts Pt/La$_{0.5}$Ce$_{0.5}$MnO$_3$ and Pt/SiO$_2$ decreases during the first 2 hours and continues to fall after this time, though at a slower rate. On the other hand, the catalyst Pt/s-50%MgO-CeO$_2$ presents a practically constant $N_2$ production rate even after 24 h of reaction. This Is a result of great importance since it is known that many de-NO$_x$ catalysts that have been tested undergo a deactivation with time on stream when water is present in the feed stream [3].

**Example 8**

In this example, the stability of the catalyst 0.1 %wt Pt/50%MgO-CeO$_2$ for the reaction $NO/H_2/O_2$ in $NO_x$ oxidation conditions and in the presence of $SO_2$ in the feed stream is studied. The sulphur dioxide is one of the known poisons of many de-NO$_x$ catalysts [17].

The reaction $NO/H_2/O_2/SO_2$ is studied at 200 °C using 150 mg of the catalyst 0.1 %wt Pt/50%MgO-CeO$_2$ and a feed composition of 0.25 %vol NO, 1 %vol H$_2$, 5 %vol O$_2$, 23 ppm SO$_2$ and 93.75 %vol He. A flow rate of 100 ml(STP) /min was used, which is equivalent to a GHSV of approximately 80,000 h$^{-1}$. Figure 7 presents the NO conversion profiles with time on stream at 200°C on the catalyst 0.1 %wt Pt/50%MgO-CeO$_2$ when the sulphated and non-sulphated 50% MgO-CeO$_2$ support is used (see Example 1). The catalyst Pt/MgO-CeO$_2$ with the non-sulphated support is rapidly deactivated with time on stream and becomes completely deactivated after 20 h of reaction. Nevertheless, the catalyst Pt/MgO-CeO$_2$ with the support previously sulphated (Example 1) has a completely different behaviour (Fig. 7). This catalyst presents just a slight drop in NO conversion during the first 4 hours on stream, where at the same time a practically constant NO conversion after the first 4 hours for a total time on stream of 24 h is obtained. This is a result of excellent stability and of industrial importance since no stable catalysts for the reaction $NO/H_2/O_2$ in the presence of low concentrations of SO$_2$ have been reported, It is stated here that the concentration of SO$_2$ in many industrial streams lies in the range 5-20 ppm. Thus, the catalyst 0.1 %wt Pt/50%MgO-CeO$_2$ with the pre-sulphated support can find practical applications even in cases of maximum SO$_2$ concentrations present in combustion streams.

**Example 9**

This example shows the effect of the partial pressure of hydrogen on the temperature profile of the Integral production rate of $N_2$ In the reaction $NO/H_2/O_2$ under $NO_x$ oxidation conditions on the catalyst 0.1 %wt Pt/50%MgO-CeO$_2$. The experimental reaction conditions used in this example are the same as in Example 3. Figure 8 presents the temperature profiles of the $N_2$ production rate obtained with the catalyst 0.1 %wt Pt/50%MgO-CeO$_2$ (non-sulphated support) for the reaction $NO/H_2/O_2$ and using hydrogen concentrations of 1 and 3 %vol. As shown in Fig. 8, the integral production rate of $N_2$ substantially improves for all reaction temperatures when the H$_2$ concentration Increases from 1 to 3 %vol. In particular, an increase of two and four times Is obtained at 150 and 200°C respectively, when the hydrogen concentration in the feed stream increases from 1 to 3 %vol. This is a result of great importance since with the increase in hydrogen concentration the quantity of catalyst can be regulated towards a minimum cost and desirable $N_2$ product yields.

## Example 10

This final example describes the effect of contact time (in terms of W/F ratio) on the NO conversion with the catalyst 0.1 %wt Pt/50%MgO-CeO$_2$. The feed stream consisted of 0.25 %vol NO, 1.0 %vol H$_2$, 5.0 %vol O$_2$ and 93.75 %vol He. The variation in W/F was achieved by adjusting the quantity of catalyst (75-150 mg) and flow rate (50-200 ml/min).

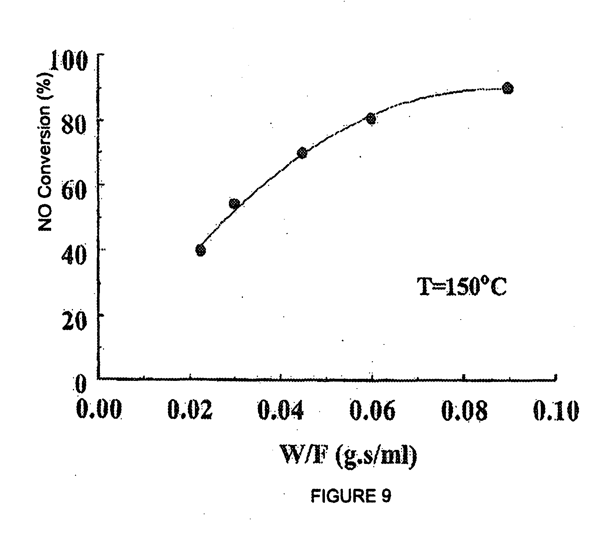

Figure 9 shows the effect of the contact time on the NO conversion with the catalyst 0.1 %wt Pt/MgO-CeO$_2$ at 150 °C. The NO conversion rapidly increases with the increase in contact time from 0.02 to 0.09 g.s/ml. It is stated that the contact times of the NH$_3$-SCR of NO$_x$ reactors on commercial catalysts have typical values in the range 0.04-0.6 g.s/ml [1,54-56]. The low contact time required for obtaining high conversions of NO on the catalyst Pt/MgO-CeO$_2$ indicates that the activity of this catalyst is sufficiently high for industrial applications.

## BRIEF DESCRIPTION OF THE FIGURES

Figure 1 presents the integral production rates of N$_2$ per gram of catalyst as a function of the MgO content (x, %wt) in catalysts 0.5 %wt Pt/x wt%MgO-CeO$_2$, obtained after steady state was achieved in the reaction NO/H$_2$/O$_2$ at 150 °C and 300 °C. Reaction conditions; H$_2$ = 1.0 %vol, NO = 0.25 %vol, O$_2$ = 5 %vol, W = 0.1 g, GHSV = 80,000 h$^{-1}$, P$_{tot}$ = 1.0 bar.

Figure 2 shows the influence of the content of Pt metal (%wt) on the integral production rates of N$_2$ during the reaction NO/H$_2$/O$_2$ (steady state) under NO$_x$ oxidation conditions on the catalysts x %wt Pt/50%MgO-CeO$_2$ in the range 100-400 °C. Reaction conditions: H$_2$ = 1.0 %vol, NO = 0.25 %vol, O$_2$ = 5 %vol, W = 0.1 g. GHSV = 80,000 h$^{-1}$, P$_{tot}$ =1.0 bar.

Figure 3 shows the effect of the preparation method on the temperature profile of the integral production rates of N$_2$ for the reaction NO/H$_2$/O$_2$ (steady state) under NO$_x$ oxidation conditions on the catalyst 0.5 %wt Pt/50%MgO-CeO$_2$. Reaction conditions: H$_2$ = 1.0 %vol, NO = 0.25 %vol, O$_2$ = 5 %vol, W = 0.1 g. GHSV = 80,000 h$^{-1}$, P$_{tot}$ = 1.0 bar.

Figure 4 compares the NO conversion versus temperature profiles (X$_{NO}$) of the reaction NO/H$_2$/O$_2$ (steady state) under NO$_x$ oxidation conditions on the catalyst 0.1 %wt Pt/s-50%MgO-CeO$_2$ (•), 0.1 %wt Pt/La$_{0.5}$Ce$_{0.5}$MnO$_3$ (▲) and 0.1 %wt Pt/SlO$_2$ (■). Reaction conditions: H$_2$ = 1.0 %vol, NO = 0.25 %vol, O$_2$ = 5 %vol, H$_2$O = 5 %vol, W = 0.15 g. GHSV = 80,000 h$^{-1}$, P$_{tot}$ =1.0 bar.

Figure 5 compares the temperature profiles of nitrogen selectivity (S$_{N2}$) of the reaction NO/H$_2$/O$_2$ (steady state) under NO$_x$ oxidation conditions on the catalysts 0.1 %wt Pt/s-50%MgO-CeO$_2$ (•). 0.1 %wt Pt/La$_{0.5}$Ce$_{0.6}$MnO$_3$ (▲) and 0.1 %wt Pt/SiO$_2$ (■), Reaction conditions: H$_2$ = 1.0 %vol. NO = 0.25 %vol. O$_2$ = 5 %vol, H$_2$O = 5 %vol, W = 0.15 g, GHSV = 80,000 h$^{-1}$, P$_{tot}$ = 1.0 bar.

Figure 6 compares the stability (in terms of integral reaction rates of N$_2$) with time on stream over the catalysts 0.1 %wt Pt/s-50%MgO-CeO$_2$ (•), 0.1 %wt Pt/La$_{0.5}$Ce$_{0.5}$MnO$_3$ (▲) and 0.1 %wt Pt/SiO$_2$ (■). Reaction conditions: H$_2$ = 1.0 %vol, NO = 0.25 %vol, O$_2$ = 5 %vol, H$_2$O = 5 %vol, W = 0.15 g, GHSV = 80,000 h$^{-1}$, P$_{tot}$ = 1.0 bar.

Figure 7 compares the influence of the presence of SO$_2$ in the reaction stream on the NO conversion (X$_{NO}$) during the reaction NO/H$_2$/O$_2$ (steady state) under NO$_x$ oxidation conditions on the catalyst 0.1 %wt Pt/50%MgO-CeO$_2$ pre-sulphated (•) and non-sulphated (▲). Reaction conditions: H$_2$ = 1.0 %vol, NO = 0.25 %vol, O$_2$ = 5 %vol, SO$_2$ = 23 ppm, T = 200 °C, W = 0.15 g, GHSV = 80,000 h$^{-1}$, P$_{tot}$ = 1.0 bar.

Figure 8 presents the effect of the partial pressure of hydrogen on the integral jproduction rate of N$_2$ as a function of reaction NO/H$_2$/O$_2$ temperature under NO$_x$ oxidation conditions at a total pressure of 1 bar on the catalyst 0.1 %wt Pt/50%MgO-CeO$_2$. Reaction conditions: H$_2$ = 1.0 %vol, NO = 0.25 %vol, O$_2$ = 5 %vol, W = 0.15 g, GHSV = 80,000 h$^{-1}$ (•), and H$_2$ =3.0 %vol, NO = 0.25 %vol, O$_2$ = 5 %vol, W = 0.075 g, GHSV = 320,000 h$^{-1}$ ( ).

Figure 9 shows the influence of contact time (in terms of W/F) on NO conversion in the reaction NO/H$_2$/O$_2$ (steady state) under NO$_x$ oxidation conditions on the catalyst 0.1 %wt Pt/50%MgO-CeO$_2$. Reaction conditions: H$_2$ = 1 %vol, NO = 0.25 %vol, O$_2$ = 5 %vol, T = 150 °C, P$_{tot}$ = 1.0 bar.

## Cited bibliography

1. G. Buses, L. Lietti, G. Ramis and F. Berti, Appl. Catal. B: Environ. 18 (1998) 1: V.I. Parvulescu, P. Grange, B. Delmon, Catal. Today 46 (1998) 233.

2. C. J. Pereria and K.W. Phumlee, Catal. Today 13 (1992) 23.

3. A. Fritz and V. Pitchon, Appl. Catal. B: Environ. 13 (1997) 1.

4. V.M. Zamansky, P.M. Maly, M.Sheldon, W.R. Seeker, B.A. Folsom, "Second Generation Advanced Reburning for high efficiency NOx control", Energy and Environmental Research Corporation, report under Contract No. DE-AC22-95PC95251".

5. R.I. Pusateri, J.R. Katzer and W.H. Monaque, AICHE J. 20 (1974) 219.

6. T. Tabata, M. Kokltsu and O. Okada. Catal. Today 22 (1994) 147.

7. M. Iwamoto, H. Yahiro, Catal. Today 22 (1994) 5.

8. A. Obuchi, A. Ohi, M. Nakamura, A. Ogata, K. Mizuno and H. Ohuchi, Appl. Catal. B: Environ. 2 (1993) 71.

9. R. Burch, P.J. Millington and A.P. Walker, Appl. Catal. B: Environ. 4 (1995) 65.

10. D.K. Captain, K.L. Roberts and M.D. Amiridis, Catal. Today 42 (1998) 65.

11. R. Burch, J.A.Sullivan and T.C. Wading, Catal. Today 42 (1998) 13.

12. R. Burch and A. Ramli, Appl. Catel. B: Environ. 15 (1998) 63.

13. M.D. Amiridis, K..L. Roberts and C.J. Perreria, Appl. Catal. B: Environ. 14 (1997)203.

14. G.R. Bamwenda, A. Ogata, A. Obuchi, J. Ol, K. Mizuno and J. Skrzypek, Appl. Catel. B: Environ. 6 (1995) 311.

15. E.A. Efthimiades, S.C. Christoforou, A.A. Nikolopoulos and I.A. Vasalos, Appl. Catal. B: Environ. 22 (1999) 91.

16. E. Seker, J. Cavatio, E. Gulari, P. Lorpongpalboon and S. Osuwan, Appl. Catal. A 183 (1999) 121.

17. H. Hirabayashi, H. Yahiro, N. Mizuno and M. Iwamoto, Chem. Lett. (1992) 2235.

18. G. Zhang, T. Yamaguchi, H. Kawakami and T. Suzuki, Appl. Catal. B: Environ. 1 (1992) L 15-20.

19. A. Obuchi, A. Ohi, M. Nakamura, A, Ogata, K. Mizuno and H. Ohuchi, Appl. Catal. B: Environ. 2 (1993) 71.

20. F.J. Janssen, in G. Ertl, H. Knözinger and J. Weitkamp (Eds.), Handbook of Heterogeneous Catalysis, VCH, Weinhetm. (1997) p. 1633.

21. B. Rausenberger, W. Swiech, A.K Schmid, C.S. Rastomjee, W. Emgel and A.M. Bradshaw, J. Chem. Soc., Faraday Trans. 94(7) (1998) 963; F. Nakajima. I. Hamada. Catal. Today 29 (1996) 109; H. Gutberlet, B. Schallert, Catal. Today 16 (1993) 207.

22. R. Dumpelmannm, N.W. Cant and D.L. Trimm in A. Frennet and J.-M. Bastin (Eds.) 3rd ICC and Automotive Pollution Control, Brussels, 2 (1994) 13.

23. K. Tomishige, K. Asakura and U. Iwasawa, J. Catal. 157 (1995) 472.

24. W.C. Hecker and A.T. Bell. J. Catal. 92 (1985) 247.

25. A. Homung, M. Muhler and G. Ertl, Catel. Lett. 53 (1998) 77.

26. T.P. Kobylinski and B.W. Taylor, J. Catal. 33 (1974) 376.

27. S.J. Huang, A.B. Walters and M.A. Vannice, J. Catel. 173 (1998) 229.

28. R. Burch and S. Squire, Catal. Lett. 27 (1994) 177.

29. T.M.Salama, R. Ohnishi, T. Shido and M. Ichikawa, J. Catal. 162 (1996) 169.

30. Tanaka, K. Yokota, H. Doi and M. Sugiura, Chem. Lett. (1997) 273.

31. A. Lindsteld, D. Strömberg and M.A. Milh, Appl. Catal. 116 (1994) 109.

32. D. Ferri, L. Foml, M.A.P. Dekkers and B.E. Nieuwenhuys. Appl. Catal. B: Environ. 16 (1998) 339.

33. J.R. Rostrup-Nielsen, Catal. Today 18 (1993) 305.

34. I. Alstrup, J. Catal. 109 (1998) 241.

35. S.T.Ceyer, Q.Y. Yang, M.B. Lee, J.D. Beckerle and A.D. Johnson, Stud. Surf. Sci. Catal. 36 (1987) 51.

36. I. Alstrup and M.T. Travers. J. Catal. 135 (1992) 147.

37. T.B. Beebe, Jr., D.W. Goddman, B.D. Kay and T.J. Yates, Jr., J. Chem. Phys. 87 (1987) 2305.

38. I. Alstrup. I. Chorkendorff and S. Ullmann. Surf. Sci. 234 (1990) 79.

39. H.J. Topter, Gas Wasserfach 117 (1976) 412.

40. S. Tenner, Hydrocarbon Processing 66(7) (1987) 42.

41. A.T. Ashcroft. A.K. Cheetham, M.L.H. Green and P.D.F. Vernon, Nature 352 (1991) 225.

42. J.T. Richardson and S.A. Paripatyadar, Appl. Catal. 61 (1990) 293.

43. I.M. Bodrov and L.O. Apel'baum. Kinet. Katal. 8 (1967) 379.

44. I.M. Bodrov and L.O. Apel'baum, Kinet. Katal. 5 (1964) 696.

45. M.A. Peña, J.P. Gomez and J.L.G. Fierro, Appl. Catal. A; Gen. Chem. 144 (1996) 7.

46. B. Frank, G. Emig and A. Renken, Appl. Catal. B: Environ. 19 (1998) 45.

47. R. Burch, M.D. Coleman, Appt. Catal. B. Environ. 23 (1999) 115.

48. A. Ueda, T. Nakao, M. Azuma and T. Kobayashi, Catal. Today 45 (1998) 135.

49. K. Yokota. M. Fukul and T. Tanaka, Appl. Surf. Sci 121/122 (1997) 273.

50. M. Machida, S. Ikeda, D. Kurogi and T. Kijima, Appl. Catel. B: Environ. 35 (2001)107.

51. R. Burch, P.J. Millington and A.P. Walker Appl. Catal B. Environ. 4 (1994) 65.

52. M. Fukui and K. Yokata, Shokubai, Catalysts and Catalysis 36 (1994) 160.

53. C.N. Costa, V.N. Stathopoulos, V.C. Belessi and A.M. Efstathiou, J. Catal. 197 (2001) 350.

54. G. Canti, J. Mol. Catal. A: Chem. 173 (2001) 287.

55. B. Ramachandran, G.R. Herman, S. Choi. H.G. Stenger, C.E. Lyman and J.W. Sale, Catal. Today 55 (2000) 281.

56. R. Khodayari and C.U.I. Odenbrand, Appl. Catal. B: Environ. 33 (2001) 277.

57. K. Balakrishnan and R.D. Gonzalez. J. Catal, 144 (1993) 395.

58. C.N. Costa, P.G. Sawa, C. Andronikou, G. Lambrou, K. Polychronopoulou, V.N. Stathopoulos, V.C. Belessi, P.J. Pomanis and A.M. Efstathiou, J. Catal. 209 (2002) 456.

59. S. Galvano and G. Paravano, J. Catal. 55 (1978) 178.

60. S. Kikuyama, I. Matsukama, R. Kikuchi, K. Sasaki and K. Eguchi, Appl. Catal. A: Gen. General 219 (2001) 107.

61. S. Hodjati, C. Petit, V. Pitchon and A. Kiennomann, Appl. Catal. B: Environ. 30 (2001) 247.

62. V.C. Belessi, C.N. Costa, T.V. Bakas, T. Anastasiadou, A.M. Efstathtou and P.J. Pomonis. Catal. Today 59 (2000) 347.

## Claims

1. A catalyst comprising Pt in an amount between 0.1 and 2 wt% included, the latter dispersed on a pre-nitrated and pre-sulphated mixed metal oxide support of Mg and Ce.

2. A catalyst in accordance with claim 1, wherein the metal content is 0.1 wt% of Pt dispersed on the mixed metal oxide support of Mg and Ce.

3. A catalyst in accordance with claim 1 comprising Pt supported on a mixed metal oxide of 50 wt% MgO and 50 wt% $CeO_2$.

4. A catalyst in accordance with claim 1 further comprising more than one compounds selected from the group consisting of Pt, MgO, $CeO_2$, $MgSO_4$ and $Ce_2(SO_4)_3$.

5. A process for obtaining a catalyst comprising Pt in an amount between 0.1 and 2 wt% included, the latter dispersed on a pre-nitrated and pre-sulphated mixed metal oxide support of Mg and Ce, with crystals of platinum deposited on the MgO and $CeO_2$ phases in a proportion 1:1, comprising:

   - impregnating MgO and $CeO_2$ phases with an aqueous solution containing the desired quantity of nitrate precursor,
   - evaporation of the excess water, drying, grinding and heating at 300 ˚C in an air flow for 2 h,
   - impregnating the resulting product with an aqueous solution containing the desired quantity of sulphate precursor,
   - evaporation of water, drying, grinding and calcination at 600 ˚C in an air flow for 2 h
   - impregnating the resulting mixed sulphated oxide with an aqueous solution containing the desired quantity of platinum precursor,
   - evaporation of water, drying, grinding and heating at 600 ˚C in an air flow until complete decomposition of the platinum precursor and
   - reduction of the catalyst at 300 ˚C in $H_2$ flow for at least for 2 h, thereby achieving a dispersion of 80 % in the catalyst 0.1 %wt Pt/s-50%MgO-$CeO_2$.

6. A method of reducing a chemical compound selected from the group consisting of NO, $NO_2$ and/or a mixture of NO and $NO_2$ to $N_2$ gas using hydrogen ($H_2$) as reducing agent and in the presence or absence of oxygen by a catalyst comprising Pt in an amount between 0.1 and 2.0 wt% included, dispersed on a pre-sulphated mixed metal oxide support of Mg and Ce, as defined in claim 1.

7. A method in accordance with claim 6 wherein a reactor selected from the group consisting of a fixed bed reactor and a monolith type reactor is used.

## Patentansprüche

1. Katalysator umfassend Pt in einer Menge zwischen einschließlich 0,1 und 2 Gew.%, wobei das letztere auf einem vornitrierten und vorsulfierten Mischmetelloxidträger aus Mg und Ce dispergiert ist.

2. Katalysator nach Anspruch 1, wobei der Metallgehalt 0,1 Gew.% Pt beträgt, dispergiert auf dem Mischmetalloxidträger aus Mg und Ce.

3. Katalysator gemäß Anspruch 1, umfassend Pt getragen auf einem Mischmetalloxidträger aus 50 Gew.% MgO und 50 Gew.% $CeO_2$.

4. Katalysator nach Anspruch 1, des weiteren umfassend mehr als eine Verbindung gewählt aus der Gruppe bestehend aus Pt, MgO, $CeO_2$, $MgSO_4$ und $Ce_2(SO_4)_3$.

5. Verfahren um einen Katalysator zu erhalten, umfassend Pt in einer Menge zwischen einschließlich 0,1 und 2,0 Gew.%, wobei das letztere dispergiert ist auf einem vornitrierten und vorsuffierten Mischmetalioxidträger aus Mg und Ce, mit Platinkristallen, welche auf den MgO- und $CeO_2$-Phasen in einem Verhältnis 1:1 abgeschieden sind, umfassend:

   - Tränken der MgO- und $CeO_2$-Phasen mit einer wässrigen Lösung, welche die gewünschte Menge des Nitratvorläufers enthält,
   - Verdampfen des Überschusses an Wasser, Trocknen, Mahlen und Erwärmen bei 300°C in einem Luftfluss für zwei Stunden,
   - Tränken des resultierenden Produktes mit einer wässrigen Lösung, welche die gewünschte Menge des Sulfatvorläufers enthält.
   - Verdampfen von Wasser, Trocknen, Mahlen und Kalzinieren bei 600°C in einem Luftstrom für zwei Stunden.
   - Tränken des resultierenden gemischten Sulgatoxids mit einer wässrigen Lösung, welche die gewünschte Menge des Platinvorläufers enthält,
   - Verdampfen von Wasser, Trocknen, Mahlen und Erwärmen bei 600°C in einem Luftstrom bis zur vollständigen Zersetzung des Platinvorläufers und
   - Reduktion des Katalysators bei 300°C in einem $H_2O$-Strom für wenigstens zwei Stunden, wodurch eine Dispersion von 80% in dem Katalysator von 0,1 Gew.% Pt/s-50%MgO-$CeO_2$ erzielt wird.

6. Verfahren zum Reduzieren einer chemischen Verbindung gewählt aus der Gruppe bestehend aus NO, $NO_2$ und/ oder einer Mischung aus NO und $NO_2$ zu $N_2$-Gas unter Verwendung von Wasserstoff ($H_2$) als Reduktionsmittel und in der Anwesenheit oder Abwesenheit von Sauerstoff, durch einen Katalysator umfassend Pt in einer Menge zwischen einschließlich 0,1 und 2,0 Gew.%. dispergiert auf einem vorsulfierten Mischmetalloxidträger aus Mg und Ce, wie in Anspruch 1 definiert.

7. Verfahren nach Anspruch 6, wobei ein Reaktor, gewählt aus der Gruppe bestehend aus einem Festbettreaktor und einem Monolithreaktor verwendet wird.

**Revendications**

1. Catalyseur comprenant Pt dans une quantité de 0,1 à 2 % en poids inclus, ce dernier dispersé sur un support d'oxydes métalliques mixtes de Mg et Ce pré-nitrés et pré-sulfatés.

2. Catalyseur selon la revendication 1, dans lequel la teneur en métal est de 0,1 % en poids de Pt dispersé sur le support d'oxydes métalliques mixtes de Mg et Ce.

3. Catalyseur selon la revendication 1 comprenant Pt mis sur support sur un oxyde métallique mixte de 50 % en poids de MgO et de 50 % en poids de $CeO_2$.

4. Catalyseur selon la revendication 1 comprenant en plus plus qu'un composé choisi parmi Pt, MgO, $CeO_2$, $MgSO_4$ et $Ce_2(SO_4)_3$.

5. Procédé pour l'obtention d'un catalyseur comprenant Pt dans une quantité de 0,1 à 2 % en poids inclus, ce dernier dispersé sur un support d'oxydes métalliques mixtes de Mg et Ce pré-nitrés et pré-sulfatés avec des cristaux de platine déposés sur les phases de MgO et de $CeO_2$ dans une proportion de 1:1 comprenant :

   - l'imprégnation des phases de MgO et de $CeO_2$ avec une solution aqueuse contenant la quantité souhaitée de précurseur de nitrate,
   - l'évaporation de l'eau en excès, le séchage, le broyage et le chauffage à 300°C dans un écoulement d'air pendant 2 h,
   - l'imprégnation du produit résultant avec une solution aqueuse contenant la quantité souhaitée de précurseur de sulfate,

- l'évaporation d'eau, le séchage, le broyage et la calcination à 600˚C dans un écoulement d'air pendant 2 h,
- l'imprégnation de l'oxyde sulfaté mixte résultant avec une solution aqueuse contenant la quantité souhaitée de précurseur de platine,
- l'évaporation d'eau, le séchage, le broyage et le chauffage à 600˚C dans un écoulement d'air jusqu'à décomposition complète du précurseur de platine et
- la réduction du catalyseur à 300˚C dans un écoulement de $H_2$ pendant au moins 2 h, réalisant par là une dispersion de 80 % dans le catalyseur de 0,1 % en poids de Pt/s-50 % de MgO- $CeO_2$.

6. Procédé de réduction d'un composé chimique choisi parmi NO, $NO_2$ et/ou un mélange de NO et de $NO_2$ en $N_2$ gazeux en utilisant de l'hydrogène ($H_2$) comme agent réducteur et en présence ou en l'absence d'oxygène par un catalyseur comprenant Pt dans une quantité de 0,1 à 2,0 % en poids inclus dispersé sur un support d'oxydes métalliques mixtes de Mg et de Ce pré-sulfatés comme défini dans la revendication 1.

7. Procédé selon la revendication 6, dans lequel on utilise un réacteur choisi parmi un réacteur à lit fixe et un réacteur de type monolithe.

FIGURE 1

FIGURE 2

FIGURE 3

FIGURE 4

FIGURE 5

EP 1 475 149 B1

FIGURE 6

FIGURE 7

FIGURE 8

FIGURE 9

# EP 1 475 149 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **G. BUSES ; L. LIETTI ; G. RAMIS ; F. BERTI.** *Appl. Catal. B: Environ.,* 1998, vol. 18, 1
- **V.I. PARVULESCU ; P. GRANGE ; B. DELMON.** *Catal. Today,* 1998, vol. 46, 233
- **C. J. PERERIA ; K.W. PHUMLEE.** *Catal. Today,* 1992, vol. 13, 23
- **A. FRITZ ; V. PITCHON.** *Appl. Catal. B: Environ.,* 1997, vol. 13, 1
- **V.M. ZAMANSKY ; P.M. MALY ; M.SHELDON ; W.R. SEEKER ; B.A. FOLSOM.** Second Generation Advanced Reburning for high efficiency NOx control. Energy and Environmental Research Corporation
- **R.I. PUSATERI ; J.R. KATZER ; W.H. MONAQUE.** *AICHE J.,* 1974, vol. 20, 219
- **T. TABATA ; M. KOKLTSU ; O. OKADA.** *Catal. Today,* 1994, vol. 22, 147
- **M. IWAMOTO ; H. YAHIRO.** *Catal. Today,* 1994, vol. 22, 5
- **A. OBUCHI ; A. OHI ; M. NAKAMURA ; A. OGATA ; K. MIZUNO ; H. OHUCHI.** *Appl. Catal. B: Environ.,* 1993, vol. 2, 71
- **R. BURCH ; P.J. MILLINGTON ; A.P. WALKER.** *Appl. Catal. B: Environ.,* 1995, vol. 4, 65
- **D.K. CAPTAIN ; K.L. ROBERTS ; M.D. AMIRIDIS.** *Catal. Today,* 1998, vol. 42, 65
- **R. BURCH ; J.A.SULLIVAN ; T.C. WADING.** *Catal. Today,* 1998, vol. 42, 13
- **R. BURCH ; A. RAMLI.** *Appl. Catel. B: Environ.,* 1998, vol. 15, 63
- **M.D. AMIRIDIS ; K..L. ROBERTS ; C.J. PERRERIA.** *Appl. Catal. B: Environ.,* 1997, vol. 14, 203
- **G.R. BAMWENDA ; A. OGATA ; A. OBUCHI ; J. OL ; K. MIZUNO ; J. SKRZYPEK.** *Appl. Catel. B: Environ.,* 1995, vol. 6, 311
- **E.A. EFTHIMIADES ; S.C. CHRISTOFOROU ; A.A. NIKOLOPOULOS ; I.A. VASALOS.** *Appl. Catal. B: Environ.,* 1999, vol. 22, 91
- **E. SEKER ; J. CAVATIO ; E. GULARI ; P. LORPONGPALBOON ; S. OSUWAN.** *Appl. Catal. A,* 1999, vol. 183, 121
- **H. HIRABAYASHI ; H. YAHIRO ; N. MIZUNO ; M. IWAMOTO.** *Chem. Lett.,* 1992, 2235
- **G. ZHANG ; T. YAMAGUCHI ; H. KAWAKAMI ; T. SUZUKI.** *Appl. Catal. B: Environ.,* 1992, vol. 1, 15-20

- **A. OBUCHI ; A. OHI ; M. NAKAMURA ; A, OGATA ; K. MIZUNO ; H. OHUCHI.** *Appl. Catal. B: Environ.,* 1993, vol. 2, 71
- Handbook of Heterogeneous Catalysis. VCH, 1997, 1633
- **B. RAUSENBERGER ; W. SWIECH ; A.K SCHMID ; C.S. RASTOMJEE ; W. EMGEL ; A.M. BRADSHAW.** *J. Chem. Soc., Faraday Trans.,* 1998, vol. 94 (7), 963
- **F. NAKAJIMA ; I. HAMADA.** *Catal. Today,* 1996, vol. 29, 109
- **H. GUTBERLET ; B. SCHALLERT.** *Catal. Today,* 1993, vol. 16, 207
- 3rd ICC and Automotive Pollution Control. 1994, vol. 2, 13
- **K. TOMISHIGE ; K. ASAKURA ; U. IWASAWA.** *J. Catal.,* 1995, vol. 157, 472
- **W.C. HECKER ; A.T. BELL.** *J. Catal.,* 1985, vol. 92, 247
- **A. HOMUNG ; M. MUHLER ; G. ERTL.** *Catel. Lett.,* 1998, vol. 53, 77
- **T.P. KOBYLINSKI ; B.W. TAYLOR.** *J. Catal.,* 1974, vol. 33, 376
- **S.J. HUANG ; A.B. WALTERS ; M.A. VANNICE.** *J. Catel,* 1998, vol. 173, 229
- **R. BURCH ; S. SQUIRE.** *Catal. Lett.,* 1994, vol. 27, 177
- **T.M.SALAMA ; R. OHNISHI ; T. SHIDO ; M. ICHIKAWA.** *J. Catal.,* 1996, vol. 162, 169
- **TANAKA ; K. YOKOTA ; H. DOI ; M. SUGIURA.** *Chem. Lett.,* 1997, 273
- **A. LINDSTELD ; D. STRÖMBERG ; M.A. MILH.** *Appl. Catal.,* 1994, vol. 116, 109
- **D. FERRI ; L. FOML ; M.A.P. DEKKERS ; B.E. NIEUWENHUYS.** *Appl. Catal. B: Environ.,* 1998, vol. 16, 339
- **J.R. ROSTRUP-NIELSEN.** *Catal. Today,* 1993, vol. 18, 305
- **I. ALSTRUP.** *J. Catal.,* 1998, vol. 109, 241
- **S.T.CEYER ; Q.Y. YANG ; M.B. LEE ; J.D. BECKERLE ; A.D. JOHNSON.** *Stud. Surf. Sci. Catal.,* 1987, vol. 36, 51
- **I. ALSTRUP ; M.T. TRAVERS.** *J. Catal.,* 1992, vol. 135, 147
- **T.B. BEEBE, JR. ; D.W. GODDMAN ; B.D. KAY ; T.J. YATES, JR.** *J. Chem. Phys.,* 1987, vol. 87, 2305
- **I. ALSTRUP. ; I. CHORKENDORFF ; S. ULLMANN.** *Surf. Sci.,* 1990, vol. 234, 79

- **H.J. TOPTER.** *Gas Wasserfach,* 1976, vol. 117, 412
- **S. TENNER.** *Hydrocarbon Processing,* 1987, vol. 66 (7), 42
- **A.T. ASHCROFT ; A.K. CHEETHAM ; M.L.H. GREEN ; P.D.F. VERNON.** *Nature,* 1991, vol. 352, 225
- **J.T. RICHARDSON ; S.A. PARIPATYADAR.** *Appl. Catal.,* 1990, vol. 61, 293
- **I.M. BODROV ; L.O. APEL'BAUM.** *Kinet. Katal.,* 1967, vol. 8, 379
- **I.M. BODROV ; L.O. APEL'BAUM.** *Kinet. Katal.,* 1964, vol. 5, 696
- **M.A. PEÑA ; J.P. GOMEZ ; J.L.G. FIERRO.** *Appl. Catal. A; Gen. Chem.,* 1996, vol. 144, 7
- **B. FRANK ; G. EMIG ; A. RENKEN.** *Appl. Catal. B: Environ.,* 1998, vol. 19, 45
- **R. BURCH ; M.D. COLEMAN.** *Appt. Catal. B. Environ.,* 1999, vol. 23, 115
- **A. UEDA ; T. NAKAO ; M. AZUMA ; T. KOBAYASHI.** *Catal. Today,* 1998, vol. 45, 135
- **K. YOKOTA ; M. FUKUL ; T. TANAKA.** *Appl. Surf. Sci,* 1997, vol. 121/122, 273
- **M. MACHIDA ; S. IKEDA ; D. KUROGI ; T. KIJIMA.** *Appl. Catel. B: Environ.,* 2001, vol. 35, 107
- **R. BURCH ; P.J. MILLINGTON ; A.P. WALKER.** *Appl. Catal B. Environ.,* 1994, vol. 4, 65
- **M. FUKUI ; K. YOKATA ; SHOKUBAI.** *Catalysts and Catalysis,* 1994, vol. 36, 160
- **C.N. COSTA ; V.N. STATHOPOULOS ; V.C. BELESSI ; A.M. EFSTATHIOU.** *J. Catal.,* 2001, vol. 197, 350
- **G. CANTI.** *J. Mol. Catal. A: Chem.,* 2001, vol. 173, 287
- **B. RAMACHANDRAN ; G.R. HERMAN ; S. CHOI. ; H.G. STENGER ; C.E. LYMAN ; J.W. SALE.** *Catal. Today,* 2000, vol. 55, 281
- **R. KHODAYARI ; C.U.I. ODENBRAND.** *Appl. Catal. B: Environ.,* 2001, vol. 33, 277
- **K. BALAKRISHNAN ; R.D. GONZALEZ.** *J. Catal,* 1993, vol. 144, 395
- **C.N. COSTA ; P.G. SAWA ; C. ANDRONIKOU ; G. LAMBROU ; K. POLYCHRONOPOULOU ; V.N. STATHOPOULOS ; V.C. BELESSI ; P.J. POMANIS ; A.M. EFSTATHIOU.** *J. Catal.,* 2002, vol. 209, 456
- **S. GALVANO ; G. PARAVANO.** *J. Catal.,* 1978, vol. 55, 178
- **S. KIKUYAMA ; I. MATSUKAMA ; R. KIKUCHI ; K. SASAKI ; K. EGUCHI.** *Appl. Catal. A: Gen. General,* 2001, vol. 219, 107
- **S. HODJATI ; C. PETIT ; V. PITCHON ; A. KIENNOMANN.** *Appl. Catal. B: Environ.,* 2001, vol. 30, 247
- **V.C. BELESSI ; C.N. COSTA ; T.V. BAKAS ; T. ANASTASIADOU ; A.M. EFSTATHTOU ; P.J. POMONIS.** *Catal. Today,* 2000, vol. 59, 347